# EUROPEAN PATENT APPLICATION

(11) **EP 4 345 141 A1**
(43) Date of publication of application: **03.04.2024**
(21) Application number: 22824253.3
(22) Date of filing: 15.06.2022
(51) Int. Cl.: C09D 127/16, C09D 101/02, C08J 9/36, C08L 23/06, H01M 50/403, H01M 50/411, H01M 50/414, C09D 7/61, C09D 7/20, C09D 179/08

(54) **COATING SLURRY, COATED SEPARATOR AND PREPARATION METHOD THEREFOR**

(30) Priority: 16.06.2021 CN 202110665849
(71) Applicant: Shenzhen Senior Technology Material Co., Ltd., Shenzhen, Guangdong 518106 (CN)
(72) Inventor: HUANG, Huizhen, Shenzhen, Guangdong 518106 (CN); YANG, Dandan, Shenzhen, Guangdong 518106 (CN); CHEN, Weiyan, Shenzhen, Guangdong 518106 (CN); XIONG, Di, Shenzhen, Guangdong 518106 (CN); CHEN, Zelin, Shenzhen, Guangdong 518106 (CN); LIN, Yulin, Shenzhen, Guangdong 518106 (CN)
(74) Representative: Bayramoglu et al.
(86) International application number: PCT/CN2022/098973
(87) International publication number: WO 2022/262778

(57) **Abstract**

A coating slurry for a battery separator includes an organic polymer, a solvent, and a photoinitiator. A coated separator prepared with the coating slurry, and a preparation method of the coated separator are also provided. The preparation method of the coated separator includes: coating the coating slurry on at least one surface of a substrate, and irradiating a coated substrate under ultraviolet (UV) light with a set energy and wavelength to allow UV crosslinking to obtain the coated separator.

## Description

### TECHNICAL FIELD

The present disclosure relates to the technical field of battery separators, and in particular to a slurry for coating a battery separator, a separator coated with the slurry, and a preparation method of the separator coated with the slurry.

### BACKGROUND

A battery separator refers to a membrane material layer between a positive electrode and a negative electrode of a battery. As a very critical component of a battery, a battery separator has a direct impact on the safety and cost of the battery. A main function of a battery separator is to isolate positive and negative electrodes of a battery, such that electrons in the battery cannot freely pass through the battery separator and ions in an electrolyte can freely pass through the battery separator.

An ionic conduction ability of a battery separator is directly related to the overall performance of a battery. The function of a battery separator to isolate positive and negative electrodes of a battery allows an increase of a current to be limited in the case of overcharging or temperature elevation of the battery, thereby preventing an explosion caused by a short circuit of the battery. In addition, a battery separator has a function of micropore self-closing protection, which plays a role in the safety protection for battery users and devices.

In consideration of the universality and economy of mass production, polyolefin (PO) polymers with a melting point of 130°C to 160°C are adopted as membrane materials in the existing technical solutions, and separator products prepared with these PO polymers have a breakage temperature of 140°C to 170°C. The existing separator products can fully meet needs when batteries are in normal use. However, when a battery undergoes overcharging, internal and external short circuits, collision, squeezing, or the like, a temperature in the battery may soar rapidly to 150°C or higher, and if a separator melts and ruptures prematurely and cannot prevent the direct contact between positive and negative electrodes of the battery, it will cause the massive accumulation of heat in a short term and the further occurrence of thermal runaway, thereby causing battery fire or even explosion accidents. Therefore, the performance of a separator is very important to the safety of a battery.

In order to solve the above problems, the existing solution is as follows: during preparation of a membrane, a crosslinking agent (such as an organosilane) is directly mixed with raw materials, and a resulting mixture is extruded at a high temperature to directly allow crosslinking. However, this method has the following disadvantages:
1. This method has large processing difficulty and a high production cost.
2. In this method, a crosslinking agent can hardly be fully dispersed in a material system and can hardly react completely. Thus, products of this method have low consistency, resulting in difficult large-scale production.

### SUMMARY

In order to solve the above problems, the present disclosure provides a coating slurry including a photoinitiator, a coated separator prepared with the coating slurry, and a preparation method of the coated separator.

Technical solutions of the present disclosure are as follows:
A coating slurry is provided, including an organic polymer, a solvent, and a photoinitiator.

Preferably, the organic polymer is added at an amount of 0.05 wt% to 50 wt%; and the organic polymer is selected from one or more of a polyvinylidene fluoride (PVDF) homopolymer, poly(vinylidene fluoride-co-hexafluoropropylene) (PVDF-HFP), poly(vinylidene fluoride-co-trichloroethylene) (PVDF-TCE), polyacrylonitrile (PAN), polymethacrylate (PMA) or a derivative thereof, polyacrylamide (PAM), a polyimide (PI), polyethylene oxide (PEO), PAN, and cellulose.

Preferably, the photoinitiator is added at an amount of 0.001 wt% to 5.0 wt%; and the photoinitiator is selected from one or a combination of two or more of azodiisobutyronitrile (AIBN), xanthone (XAN), isopropylthioxanthone (ITX), benzophenone (BP), and benzoyl peroxide (BPO).

Preferably, the solvent is selected from one or more of N,N-dimethylformamide (DMF), *N*,*N*-dimethylacetamide (DMAc), dichloroethane (DCE), trichloroethane (TCE), dichloromethane (DCM), chloroform, dimethyl sulfoxide (DMSO), sulfolane, tetramethylurea (TMU), N-methylpyrrolidone (NMP), acetone, water, trimethyl phosphate (TMP), and triethyl phosphate (TEP).

Preferably, the coating slurry further includes an inorganic material, where a mass proportion of the inorganic material in the coating slurry is 50 wt% to 95 wt%.

Preferably, the inorganic material is selected from a ceramic material, a nanowire material, or a nanotube material; the ceramic material may be selected from one or a combination of two or more of Al₂O₃, SiO₂, TiO₂, ZrO₂, MgO, CaO, AlOOH, and SiC; the nanowire material may be selected from one or more of a carbon nanowire, attapulgite, a silver nanowire, a boron carbide nanowire, nanocellulose, a copper hydroxide nanowire, a silicon monoxide nanowire, and a hydroxyapatite nanowire; and the nanotube material may be selected from one or more of a carbon nanotube (CNT), a silver nanotube, a boron carbide nanotube, a copper hydroxide nanotube, a silicon monoxide nanotube, and a hydroxyapatite nanotube. Preferably, the inorganic material is a highly heat-resistant inorganic material.

Based on the same inventive concept, the present disclosure also provides a coated separator, including a coating layer formed by the coating slurry described above, where the coating layer includes a three-dimensional (3D) network structure, and a mass of the 3D network structure is 50% or more of a total mass of the organic polymer and is 1.0% or more of a total mass of the coating layer. Based on the same inventive concept, the present disclosure also provides a coated separator, including the coating slurry described above and a substrate, where the coating slurry is coated on at least one surface of the substrate and then irradiated under ultraviolet (UV) light with a set energy and wavelength to allow UV crosslinking to obtain the coated separator.

Preferably, the substrate is selected from one or more of a PO microporous membrane, a PI microporous membrane, a non-woven membrane, a multi-layer composite membrane, a ceramic-coated membrane, and a polymer-coated membrane.

Based on the same inventive concept, the present disclosure also provides a preparation method of the coated separator, including the following steps:
(1) preparation of the coating slurry: adding no more than 50 wt% of the organic polymer, 0.001 wt% to 5.0 wt% of the photoinitiator, 50 wt% to 95 wt% of the inorganic material, and 0 wt% to 5 wt% of other additives to the solvent, and thoroughly stirring a resulting mixture to obtain the coating slurry;
(2) coating: coating the coating slurry on at least one surface of the substrate to obtain a first coated substrate;
(3) phase transformation: subjecting the first coated substrate to the phase transformation to obtain a second coated substrate;
(4) drying: rinsing and drying the second coated substrate obtained in the step (3) to obtain a composite separator; and
(5) UV crosslinking: irradiating the composite separator under UV light to initiate a crosslinking reaction to obtain a UV-crosslinked composite separator.

The present disclosure also provides a preparation method of the coated separator, including the following steps:
(1) preparation of the coating slurry: adding 0.001 wt% to 5.0 wt% of the photoinitiator, 50 wt% to 95 wt% of the inorganic material, and 0 wt% to 5 wt% of other additives to the solvent, and thoroughly stirring a resulting mixture to obtain the coating slurry;
(2) soaking: soaking the substrate in the coating slurry to obtain a first soaked substrate;
(3) phase transformation: subjecting the first soaked substrate to the phase transformation to obtain a second soaked substrate;
(4) drying: rinsing and drying the second soaked substrate obtained in the step (3) to obtain a composite separator; and
(5) UV crosslinking: irradiating the composite separator under UV light to initiate a crosslinking reaction to obtain a UV-crosslinked composite separator.

The other additives can be one or more of a dispersing agent, a wetting agent, a thickening agent, and a conductive additive.

Based on the same inventive concept, the present disclosure also provides a preparation method of the coated separator, including the following steps:
(1) preparation of the coating slurry: adding 0.001 wt% to 5.0 wt% of the photoinitiator, 50 wt% to 95 wt% of a highly heat-resistant material, and 0 wt% to 5 wt% of other additives to the solvent, and thoroughly stirring a resulting mixture to obtain the coating slurry;
(2) coating: coating the coating slurry on at least one surface of the substrate to obtain a coated substrate; or soaking: soaking the substrate in the coating slurry to obtain a soaked substrate;
(3) drying: drying the coated substrate or the soaked substrate obtained in the step (2) to obtain a composite separator; and
(4) UV crosslinking: irradiating the composite separator under UV light to initiate a crosslinking reaction to obtain a UV-crosslinked composite separator.

The drying above can be conducted through hot air, infrared (IR) irradiation, or the like.

Preferably, the UV light has a wavelength of 210 nm to 420 nm and an intensity of 50 mj/cm² or more, and the UV crosslinking is conducted for 0.001 s to 10 s.

Compared with the prior art, the present disclosure has the following advantages:
In the present disclosure, through UV crosslinking, crosslinking sites on different organic molecular segments in the coating slurry are activated and interconnected to form a network crosslinked structure, which can successfully improve a breakage temperature of a separator with a simple formula and process and a low cost, thereby greatly improving the safety of a battery.

### BRIEF DESCRIPTION OF THE DRAWINGS

FIG. 1 is a schematic diagram of a reaction process of UV irradiation during preparation of the coated separator of the present disclosure;
FIG. 2 is a schematic diagram of a microscopic network macromolecular structure formed by UV irradiation during preparation of the coated separator of the present disclosure; and

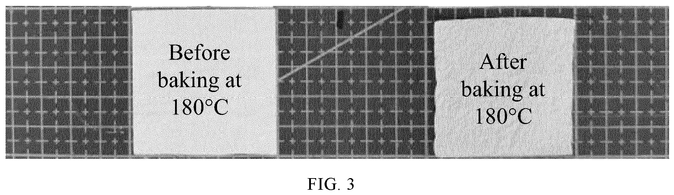

FIG. 3 is a comparison diagram of a separator sample before and after being placed in a 180°C oven for 30 min.

### DETAILED DESCRIPTION OF THE EMBODIMENTS

In order to overcome defects such as large processing difficulty, high cost, and low crosslinking consistency of the current membrane crosslinking methods, the present disclosure changes the original solution of mixing a crosslinking agent with raw materials for a membrane, and provides a solution in which a photoinitiator is added to a coating slurry and the coating slurry is coated on a membrane and then irradiated under UV light to allow crosslinking to obtain a crosslinked battery separator, which improves the performance of the battery separator and especially improves a breakage temperature of the battery separator.

Specifically, the present disclosure provides a coating slurry, including an organic polymer, a solvent, and a photoinitiator.

The organic polymer is added at an amount of 0.05 wt% to 50 wt%; and the organic polymer can be selected from one or more of a PVDF homopolymer, PVDF-HFP, PVDF-TCE, PAN, PMA or a derivative thereof, PAM, PI, PEO, PAN, and cellulose. The amount of the organic polymer added affects the performance of a battery separator. If the amount of the organic polymer added is too small, it will be impossible to form a coating layer with sufficient adhesion. If the amount of the organic polymer added is too large, a microporous structure of a separator may be blocked, which will affect the internal resistance and cycling performance of a battery. Further preferably, the organic polymer is added at an amount of 3 wt% to 45 wt%.

For example, the organic polymer is added at an amount of 0.05%, 0.1%, 0.5%, 1%, 3%, 5%, 7%, 9%, 11%, 13%, 15%, 17%, 19%, 21%, 23%, 25%, 27%, 29%, 31%, 33%, 35%, 37%, 39%, 41%, 43%, 45%, 49%, or 50%.

The photoinitiator is added at an amount of 0.001 wt% to 5.0 wt%; and the photoinitiator can be selected from one or a combination of two or more of AIBN, XAN, ITX, BP, and BPO. The amount of the photoinitiator added is closely related to performance of a separator. If the amount of the photoinitiator added is too small, a degree of crosslinking curing will be insufficient, and the improvement of a breakage temperature may not reach an expected level. If the amount of the photoinitiator added is too large, a large amount of the photoinitiator will remain in a separator, and a cost will be increased. Further preferably, the photoinitiator is added at an amount of 0.01 wt% to 5 wt%.

For example, the photoinitiator is added at an amount of 0.001%, 0.01%, 0.05%, 0.07%, 0.1%, 0.5%, 0.9%, 1%, 1.3%, 1.7%, 1.9%, 2.1%, 2.5%, 2.9%, 3.1%, 3.5%, 3.9%, 4.1%, 4.5%, 4.9%, 5.1%, 5.5%, 5.9%, 6.3%, 6.7%, 6.9%, 7.3%, 7.7%, 7.9%, 8.3%, 8.7%, 8.9%, 9.1%, 9.5%, 9.7%, or 9.9%.

The solvent can be selected from one or more of DMF, DMAc, DCE, TCE, DCM, chloroform, DMSO, sulfolane, TMU, NMP, acetone, water, TMP, and TEP.

Further, the coating slurry can further include an inorganic material, where a mass proportion of the inorganic material in the coating slurry is 50 wt% to 95 wt%.

The inorganic material may be selected from a ceramic material, a nanowire material, or a nanotube material; the ceramic material may be selected from one or a combination of two or more of Al₂O₃, SiO₂, TiO₂, ZrO₂, MgO, CaO, AlOOH, and SiC; the nanowire material may be selected from one or more of a carbon nanowire, attapulgite, a silver nanowire, a boron carbide nanowire, nanocellulose, a copper hydroxide nanowire, a silicon monoxide nanowire, and a hydroxyapatite nanowire; and the nanotube material may be selected from one or more of CNT, a silver nanotube, a boron carbide nanotube, a copper hydroxide nanotube, a silicon monoxide nanotube, and a hydroxyapatite nanotube.

The present disclosure also provides a coated separator, including a coating layer formed by the coating slurry described above, where the coating layer includes a 3D network molecular structure, and a mass of the 3D network molecular structure is 50% or more of a total mass of the organic polymer and is 1.0% or more of a total mass of the coating layer. Linear organic polymer molecular chains in the coating slurry are interconnected through branched chains after coating (or soaking), drying, and crosslinking to form a 3D network structure. In the coating layer, the 3D network crosslinked structure serves as a skeleton to tightly encapsulate an inorganic material distributed in the 3D network crosslinked structure. If the mass of the crosslinked network structure is less than 50% of the total mass of the organic polymer or is less than 1.0% of the total mass of the coating layer, a crosslinking degree will be insufficient, crosslinking sites will not be sufficiently interconnected, and the formed 3D network structure cannot maintain a sufficient strength under a high temperature or an external force.

Those skilled in the art should know that the linear organic polymer can be dissolved in a good solvent, and the crosslinked 3D network structure can only swell in a good solvent and cannot be dissolved in a good solvent. Therefore, a mass proportion of the 3D network structure can be tested as follows: the coated separator or the coating layer is placed in a volatile good solvent, then a resulting system is subjected to Soxhlet extraction and oven-drying such that the 3D network structure and the inorganic material are left, and a residue is burned with a thermogravimetric analyzer (TGA) or a crucible to left the inorganic material, such that the mass proportion of the 3D network structure can be calculated. Of course, the present disclosure is not limited to the above test method, and those skilled in the art can adopt another test method to determine the mass proportion of the 3D network structure according to actual needs.

The present disclosure also provides a coated separator, including the coating slurry described above and a substrate, where the coating slurry is coated on at least one surface (which may refer to one or two surfaces) of the substrate and then irradiated under UV light with a set energy and wavelength to allow UV crosslinking to obtain the coated separator.

The substrate includes, but is not limited to, a PO microporous membrane (such as polyethylene (PE), polypropylene (PP), and polybutylene (PB)), a PI microporous membrane, a non-woven membrane, a multi-layer composite membrane, a ceramic-coated membrane, and a polymer-coated membrane.

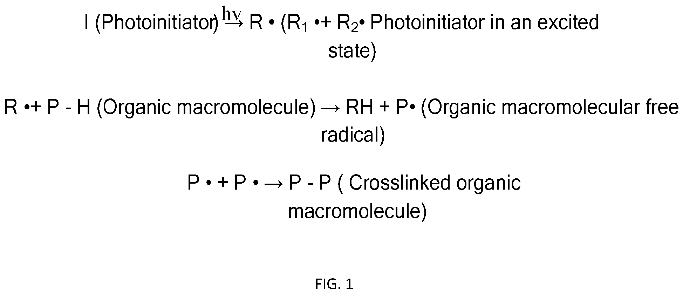

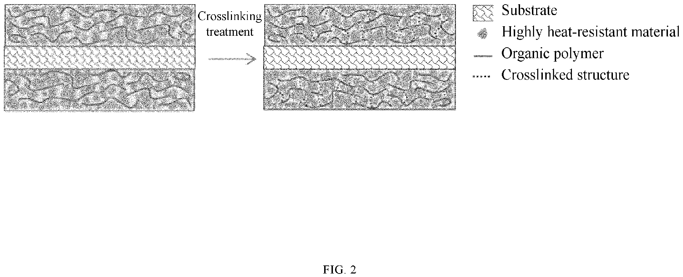

Under the UV irradiation with a set wavelength and energy during the preparation of the coated separator of the present disclosure, the photoinitiator in the coating slurry can transition from a ground state to an excited state and capture an H ion from a C-H structure in an organic matter in the coating slurry to produce organic macromolecular free radicals, and when the organic macromolecular free radicals terminate each other, organic macromolecules are crosslinked to form the microscopic network macromolecular structure shown in the right panel of FIG. 2. The above reaction process is shown in FIG. 1. The above reaction may occur in a porous substrate layer and an organic polymer coating layer simultaneously, but there may be different reaction degrees under different conditions.

The present disclosure also provides a preparation method of the coated separator, including the following steps:
(1) Preparation of the coating slurry:
   No more than 50 wt% of the organic polymer, 0.001 wt% to 5.0 wt% of the photoinitiator, 50 wt% to 95 wt% of the inorganic material, and 0 wt% to 5 wt% of other additives are added to the solvent, and a resulting mixture is thoroughly stirred to obtain the coating slurry.
(2) Coating: The coating slurry is coated on at least one surface of the substrate to obtain a first coated substrate, where the at least one surface refers to one or two surfaces.
(3) Phase transformation: The first coated substrate is subjected to the phase transformation to obtain a second coated substrate. It can be understood that the phase transformation can be conducted through a soaking and coagulating bath, heating, or the like, and a technical means for the phase transformation is not limited here. Preferably, the phase transformation can be conducted through a soaking and coagulating bath, and the soaking and coagulating bath refers to the use of a non-solvent that has a low boiling point and is incompatible with the organic matter in the coating layer to replace the original solvent to form a coating layer with micropores. The non-solvent can be selected from one or more of pure water, glycerol, ethyl acetate, polyethylene glycol (PEG), polyvinylpyrrolidone (PVP), pure water, acetone (CP), methyl acetate (MAC), formic acid, acetic acid, propionic acid, ethanol (EtOH), methanol, isopropanol (i-PrOH), n-butanol (BtOH), n-octanol (OtOH), dodecanol (DoOH), lithium chloride (LiCl), and lithium perchlorate (LiClO₄).
(4) Drying: The second coated substrate obtained in the step (3) is rinsed and dried to obtain a composite separator.
(5) UV crosslinking: The composite separator is irradiated under UV light to initiate a crosslinking reaction to obtain a UV-crosslinked composite separator, which is the coated separator.

When the above slurry coating method is adopted, the coating slurry includes the organic polymer.

The present disclosure also provides a preparation method of the coated separator, including the following steps: (1) Preparation of the coating slurry: 0.001 wt% to 5.0 wt% of the photoinitiator, 50 wt% to 95 wt% of the inorganic material, and 0 wt% to 5 wt% of other additives are added to the solvent, and a resulting mixture is thoroughly stirred to obtain the coating slurry.
(2) Soaking: The substrate is soaked in the coating slurry to obtain a first soaked substrate.
(3) Phase transformation: The first soaked substrate is soaked in a non-solvent to allow the phase transformation to obtain a second coated substrate.
(4) Drying: The second coated substrate obtained in the step (3) is rinsed and dried to obtain a composite separator.
(5) UV crosslinking: The composite separator is irradiated under UV light to initiate a crosslinking reaction to obtain a UV-crosslinked composite separator.

When the above slurry soaking method is adopted, the coating slurry can include only the photoinitiator and does not include the organic polymer.

The present disclosure also provides a preparation method of the coated separator, including the following steps:
(1) Preparation of the coating slurry: 0.001 wt% to 5.0 wt% of the photoinitiator, 50 wt% to 95 wt% of a highly heat-resistant material, and 0 wt% to 5 wt% of other additives are added to the solvent, and a resulting mixture is thoroughly stirred to obtain the coating slurry.
(2) Coating: The coating slurry is coated on at least one surface of the substrate to obtain a coated substrate; or soaking: the substrate is soaked in the coating slurry to obtain a soaked substrate.
(3) Drying: The coated substrate or the soaked substrate obtained in the step (2) is dried to obtain a composite separator.
(4) UV crosslinking: The composite separator is irradiated under UV light to initiate a crosslinking reaction to obtain a UV-crosslinked composite separator.

The drying above can be conducted through hot air, IR irradiation, or the like.

It can be seen that the solvent used in the present disclosure can generally be completely removed through heating to form a coating layer. However, when some solvents with high boiling points that are difficult to be completely removed through direct heating or require a large energy consumption for removal through heating, a solvent that has a low boiling point and is incompatible with an organic matter in the coating layer can be used to replace the original solvent to form a coating layer with micropores, and then the solvent is removed from the coating layer through drying.

In some preferred embodiments, the UV light has a wavelength of 210 nm to 420 nm and an intensity of 50 mj/cm² or more, and the UV crosslinking is conducted for 0.001 s to 10 s.

The present disclosure provides a method in which a photoinitiator is added to a coating slurry and a crosslinking reaction is allowed to form a thermosetting network polymer structure to improve a thermomechanical strength and a breakage temperature of a porous substrate. A separator product prepared by this method is characterized by thermal mechanical analysis (TMA). A breakage temperature of the separator product can be increased by 20°C to 80°C compared with a separator product obtained by a process in which no photoinitiator is added for UV crosslinking, and the separator product is not broken after being placed at 180°C for 30 min.

In addition, a specified crosslinked structure of an organic polymer layer can reduce the swelling of the organic polymer layer soaked in an electrolyte at room temperature (25°C) or a high temperature (60°C) while maintaining sufficient adhesion, which can avoid deformation of the organic polymer layer inside a battery, reduce a porosity of the organic polymer layer, and block a lithium ion transmission path, thereby improving the long-term cycling performance of the battery.

### Example 1

(1) Preparation of a coating slurry:
   9.2 wt% of PVDF and 0.3 wt% of NMP were added to 90.5 wt% of NMP, and a resulting mixture was thoroughly stirred to obtain the coating slurry.
(2) Coating: The coating slurry was coated on two surfaces of a PE porous substrate coated with a ceramic layer to obtain a first coated substrate. A thickness of the PE porous substrate was 9 µm, a thickness of the ceramic layer was 3 µm, and a thickness of a coating layer formed by the coating slurry on each surface was 0.5 µm to 1.0 µm.
(3) Phase transformation: The first coated substrate was soaked in water to allow the phase transformation to obtain a second coated substrate.
(4) Drying: The second coated substrate obtained in the step (3) was rinsed and dried to obtain a composite separator.
(5) UV crosslinking: The composite separator was irradiated under UV light to initiate a crosslinking reaction to obtain a UV-crosslinked composite separator. The UV light had a wavelength of 250 nm to 390 nm and an intensity of 100 mj/cm² or more, and the UV crosslinking was conducted for 0.1 s.

The UV-crosslinked composite separator had a TMA test result of higher than 180°C.

### Example 2

(1) Preparation of a coating slurry:
   7.5 wt% of PI, 7.5 wt% of PVDF, and 0.5 wt% of BP were added to 84.5 wt% of acetone, and a resulting mixture was thoroughly stirred to obtain the coating slurry.
(2) Coating: The coating slurry was coated on two surfaces of a PE porous substrate coated with a ceramic layer to obtain a coated substrate. A thickness of the PE porous substrate was 9 µm, and a thickness of a coating layer formed by the coating slurry on each surface was 2 µm.
(3) Drying: The coated substrate obtained in the step (3) was dried to obtain a composite separator.
(4) UV crosslinking: The composite separator was irradiated under UV light to initiate a crosslinking reaction to obtain a UV-crosslinked composite separator. The UV light had a wavelength of 250 nm to 390 nm and an intensity of 100 mj/cm² or more, and the UV crosslinking was conducted for 0.5 s.

The UV-crosslinked composite separator had a TMA test result of higher than 180°C.

### Example 3

(1) Preparation of a coating slurry:
   15 wt% of PVDF, 20 wt% of alumina, 5 wt% of nanocellulose, and 0.3 wt% of BP were added to 59.7 wt% of NMP, and a resulting mixture was thoroughly stirred to obtain the coating slurry.
(2) Coating: The coating slurry was coated on two surfaces of a PE porous substrate to obtain a first coated substrate. A thickness of the PE porous substrate was 9 µm, and a thickness of a coating layer formed by the coating slurry on each surface was 3 µm.
(3) Phase transformation: The first coated substrate was soaked in water to allow the phase transformation to obtain a second coated substrate.
(4) Drying: The second coated substrate obtained in the step (3) was dried to obtain a composite separator.
(5) UV crosslinking: The composite separator was irradiated under UV light to initiate a crosslinking reaction to obtain a UV-crosslinked composite separator. The UV light had a wavelength of 240 nm to 380 nm and an intensity of 150 mj/cm² or more, and the UV crosslinking was conducted for 0.8 s.

The UV-crosslinked composite separator had a TMA test result of higher than 180°C.

### Example 4

(1) Preparation of a coating slurry:
   3.5 wt% of PMA, 35 wt% of alumina, 0.5 wt% of BP, and 1 wt% of other additives were added to 60 wt% of water, and a resulting mixture was thoroughly stirred to obtain the coating slurry.
(2) Coating: The coating slurry was coated on a surface of a PE porous substrate to obtain a coated substrate. A thickness of the PE porous substrate was 9 µm, and a thickness of a coating layer formed by the coating slurry was 3 µm.
(3) Drying: The coated substrate obtained in the step (2) was dried by hot air or IR rays to remove the solvent in the coating layer to obtain a composite separator.
(4) UV crosslinking: The composite separator was irradiated under UV light to initiate a crosslinking reaction to obtain a UV-crosslinked composite separator. The UV light had a wavelength of 240 nm to 380 nm and an intensity of 150 mj/cm² or more, and the UV crosslinking was conducted for 0.8 s.

The UV-crosslinked composite separator had a thermal shrinkage rate of less than 5% at 150°C within 1 h and a TMA test result of higher than 180°C.

### Example 5

(1) Preparation of a coating slurry:
   3.5 wt% of PMA, 30 wt% of alumina, 5 wt% of nanocellulose, 0.5 wt% of BP, and 1 wt% of other additives were added to 60 wt% of water, and a resulting mixture was thoroughly stirred to obtain the coating slurry.
(2) Coating: The coating slurry was coated on a surface of a PE porous substrate to obtain a coated substrate. A thickness of the PE porous substrate was 9 µm, and a thickness of a coating layer formed by the coating slurry was 1.5 µm.
(3) Drying: The coated substrate obtained in the step (2) was dried by hot air or IR rays to remove the solvent in the coating layer to obtain a composite separator.
(4) UV crosslinking: The composite separator was irradiated under UV light to initiate a crosslinking reaction to obtain a UV-crosslinked composite separator. The UV light had a wavelength of 240 nm to 380 nm and an intensity of 150 mj/cm² or more, and the UV crosslinking was conducted for 0.8 s.

The UV-crosslinked composite separator had a thermal shrinkage rate of less than 5% at 150°C within 1 h and a TMA test result of higher than 180°C.

Example 5 was different from Example 4 in that: the highly heat-resistant material in the coating slurry was a combination of alumina and nanocellulose, and nanocellulose needles were dispersed in the coating layer and overlapped each other to form a physical interconnected structure, which is combined with the organic chemical crosslinked structure in this example to further enhance the heat resistance and high-temperature fusing resistance of the coating layer.

### Comparative Example 1

(1) Preparation of a coating slurry:
   9.5 wt% of PVDF was added to 90.5 wt% of NMP, and a resulting mixture was thoroughly stirred to obtain the coating slurry.
(2) Coating: The coating slurry was coated on two surfaces of a PE porous substrate coated with a ceramic layer to obtain a first coated substrate. A thickness of the PE porous substrate was 9 µm, a thickness of the ceramic layer was 3 µm, and a thickness of a coating layer formed by the coating slurry on each surface was 0.5 µm to 1.0 µm.
(3) Phase transformation: The first coated substrate was soaked in water to allow the phase transformation to obtain a second coated substrate.
(4) Drying: The second coated substrate obtained in the step (3) was rinsed and dried to obtain a composite separator.

Comparative Example 1 was different from Example 1 in that the coating layer in Comparative Example 1 did not include a photoinitiator and a crosslinked structure, and thus a TMA test result was not improved.

### Comparative Example 2

(1) Preparation of a coating slurry:
   4 wt% of PMA, 35 wt% of alumina, and 1 wt% of other additives were added to 60 wt% of water, and a resulting mixture was thoroughly stirred to obtain the coating slurry.
(2) Coating: The coating slurry was coated on a surface of a PE porous substrate to obtain a coated substrate. A thickness of the PE porous substrate was 9 µm, and a thickness of a coating layer formed by the coating slurry was 3 µm.
(3) Drying: The coated substrate obtained in the step (2) was dried to obtain a composite separator.

Comparative Example 2 was different from Example 4 in that the coating layer in Comparative Example 2 did not include a photoinitiator and a crosslinked structure, and as a result, a TMA test result was not improved and a thermal shrinkage rate at 150°C was disadvantageous.

### Comparative Example 3

(1) Preparation of a coating slurry:
   3.5 wt% of PMA, 35 wt% of alumina, 0.5 wt% of BP, and 1 wt% of other additives were added to 60 wt% of water, and a resulting mixture was thoroughly stirred to obtain the coating slurry.
(2) Coating: The coating slurry was coated on a surface of a PE porous substrate to obtain a coated substrate. A thickness of the PE porous substrate was 9 µm, and a thickness of a coating layer formed by the coating slurry was 3 µm.
(3) Drying: The coated substrate obtained in the step (2) was dried by hot air or IR rays to remove the solvent in the coating layer to obtain a composite separator.
(4) UV crosslinking: The composite separator was irradiated under UV light to initiate a crosslinking reaction to obtain a UV-crosslinked composite separator. The UV light had a wavelength of 240 nm to 380 nm and an intensity of 100 mj/cm², and the UV crosslinking was conducted for 0.5 s.

Comparative Example 3 was different from Example 4 in that the organic matter in the coating layer of Comparative Example 3 was not completely crosslinked (UV irradiation was insufficient), and the crosslinked 3D network organic molecular structure had an insufficient strength, resulting in disadvantageous 150°C thermal shrinkage and TMA test results.

The prepared composite separators each were subjected to a TMA test, and test results were shown in Table 1. Table 1 shows TMA test results of the composite separators prepared in Examples 1 to 5 and Comparative Examples 1 to 3 of the present disclosure. The TMA test was conducted with the following parameters: a size of a test sample: length: 8 mm, and width: 4 mm; a test tensile force: 0.01 n; and a heating rate: 5°C/min. It can be seen from the data in this table that breakage temperatures of the samples in Examples 1 to 3 are at least 30°C higher than a breakage temperature of the sample in Comparative Example 1 (no crosslinking curing).

**Table 1**

| No. | Thickness of a substrate (µm) | Thickness of the coating layer of the present disclosure (µm) | Thickness of another coating layer (µm) | Mass proportion of a crosslinked 3D network structure | | Heat resistance of a coated separator (150°C 1 h, %) | | TMA test result of a coated separator (°C) | |
|---|---|---|---|---|---|---|---|---|---|
| | | | | Mass proportion of a crosslinked 3D network structure in an organic polymer (%) | Mass proportion of a crosslinked 3D network structure in a coating layer (%) | MD | TD | MD | TD |
| Example 1 | 9 | 1.0-2.0 | 3 | 70% | 50% | 3.1 | 2.2 | 234.95 | 227.22 |
| Example 2 | 9 | 4 | - | 55% | 30% | - | - | 204.23 | 195.85 |
| Example 3 | 9 | 6 | - | 60% | 25% | - | - | 214.51 | 220.36 |
| Example 4 | 9 | 3 | - | 85% | 3% | 2.4 | 2 | 220.9 | 218.43 |
| Example 5 | 9 | 1.5 | - | 85% | 2.5% | 2.2 | 2.2 | 230.85 | 231.4 |
| Comparative Example 1 | 9 | 1.0-2.0 | 3 | 0% | 0% | 3.5 | 2.5 | 152.18 | 154.17 |
| Comparative Example 2 | 9 | 3 | - | 0% | 0% | 4.0 | 3.8 | 155.48 | 152.76 |
| Comparative Example 3 | 9 | 3 | - | 35% | 0.8% | 23.4 | 20.7 | 161.6 | 152.89 |

The technical solutions of the present disclosure have the following characteristics:
1. In the present disclosure, a photoinitiator is introduced into a coating slurry for a lithium-ion battery (LIB) separator, and a membrane coated with the coating slurry is irradiated under UV light with a set wavelength and energy to produce a crosslinked structure, thereby improving a thermomechanical strength and a breakage temperature of the separator (membrane).
2. A crosslinking degree of an organic polymer coating layer can be controlled to improve the hardness and solvent resistance of the coating layer and reduce the swelling of the coating layer in an electrolyte at room temperature and a high temperature, thereby improving the long-term cycling performance of a battery. A process of organic polymer crosslinking can be controlled by adjusting an amount of a photoinitiator added, selecting a UV crosslinking speed, and setting an irradiation light intensity.
3. In the present disclosure, the thermomechanical strength/breakage temperature and adhesion of a separator can be optimally balanced by adjusting a content of a photoinitiator, an intensity and wavelength of UV irradiation, and a UV crosslinking speed. A UV reaction efficiency is allowed to match with a production speed of products during the current mass production to minimize a production cost of a UV crosslinking process and improve an added value of a product. 4. In the technical solution of the present disclosure, only a photoinitiator needs to be added to induce the crosslinking of an organic matter in a conventional polymer-coated separator without requiring an additional crosslinking agent or a crosslinking monomer or a light-cured resin, which involves a simple formula and a low cost and can lead to a product with excellent performance.
5. In the current method, an initiator is directly added during preparation of a separator. However, in the method of the present disclosure, a photoinitiator is added to a coating slurry, and the coating slurry is coated on a surface of a membrane and then treated under photoinition conditions to allow crosslinking. The method of the present disclosure is simple and controllable, and can lead to a product meeting a breakage temperature requirement with a low production cost. In addition, the method of the present disclosure solves the problem of additive precipitation caused by incompatibility between an initiator and a substrate, and improves the consistency of appearance and performance of products.
6. Compared with the existing unilaterally-stretched separator product, the crosslinked separator product of the present disclosure exhibits effectively-improved tearing resistance.

The above are merely exemplary embodiments of the present disclosure. A person skilled in the art can also provide a variety of transformation solutions under the teaching of the solutions of the present disclosure, and these transformation solutions all are within the protection scope of the present disclosure.

## Claims

1. A coating slurry, comprising an organic polymer, a solvent, and a photoinitiator.

2. The coating slurry according to claim 1, wherein the organic polymer is added at an amount of 0.05 wt% to 50 wt%; and the organic polymer is selected from one or more of a polyvinylidene fluoride (PVDF) homopolymer, poly(vinylidene fluoride-co-hexafluoropropylene) (PVDF-HFP), poly(vinylidene fluoride-co-trichloroethylene) (PVDF-TCE), polyacrylonitrile (PAN), polymethacrylate (PMA) or a derivative thereof, polyacrylamide (PAM), a polyimide (PI), polyethylene oxide (PEO), PAN, and cellulose.

3. The coating slurry according to claim 1 or 2, wherein the photoinitiator is added at an amount of 0.001 wt% to 10 wt%; and the photoinitiator is selected from one or a combination of two or more of azodiisobutyronitrile (AIBN), xanthone (XAN), isopropylthioxanthone (ITX), benzophenone (BP), and benzoyl peroxide (BPO).

4. The coating slurry according to claim 1, wherein the solvent is selected from one or more of N,N-dimethylformamide (DMF), N,N-dimethylacetamide (DMAc), dichloroethane (DCE), trichloroethane (TCE), dichloromethane (DCM), chloroform, dimethyl sulfoxide (DMSO), sulfolane, tetramethylurea (TMU), N-methylpyrrolidone (NMP), acetone, water, trimethyl phosphate (TMP), or triethyl phosphate (TEP).

5. The coating slurry according to claim 1, further comprising an inorganic material, wherein a mass proportion of the inorganic material in the coating slurry is 0 wt% to 95 wt%.

6. The coating slurry according to claim 5, wherein the inorganic material is selected from a ceramic material, a nanowire material, or a nanotube material; the ceramic material is selected from one or a combination of two or more of Al₂O₃, SiO₂, TiO₂, ZrO₂, MgO, CaO, AlOOH, and SiC; the nanowire material is selected from one or more of a carbon nanowire, attapulgite, a silver nanowire, a boron carbide nanowire, nanocellulose, a copper hydroxide nanowire, a silicon monoxide nanowire, and a hydroxyapatite nanowire; and the nanotube material is selected from one or more of a carbon nanotube (CNT), a silver nanotube, a boron carbide nanotube, a copper hydroxide nanotube, a silicon monoxide nanotube, and a hydroxyapatite nanotube.

7. A coated separator, comprising a coating layer formed by the coating slurry according to any one of claims 1 to 6, wherein the coating layer comprises a three-dimensional (3D) network structure formed through interconnection of organic polymer molecules, and a mass of the 3D network structure is 50% or more of a total mass of the organic polymer and is 1.0% or more of a total mass of the coating layer.

8. A coated separator, comprising the coating slurry according to any one of claims 1 to 6 and a substrate, wherein the coating slurry is coated on at least one surface of the substrate and then irradiated under ultraviolet (UV) light with a set energy and wavelength to allow UV crosslinking to obtain the coated separator.

9. The coated separator according to claim 8, wherein the substrate is selected from one or more of a polyolefin (PO) microporous membrane, a PI microporous membrane, a non-woven membrane, a multi-layer composite membrane, a ceramic-coated membrane, and a polymer-coated membrane.

10. A preparation method of the coated separator according to any one of claims 7 to 9, comprising the following steps:
(1) preparation of the coating slurry: adding no more than 50 wt% of the organic polymer, 0.001 wt% to 5.0 wt% of the photoinitiator, 50 wt% to 95 wt% of the inorganic material, and 0 wt% to 5 wt% of other additives to the solvent, and thoroughly stirring a resulting mixture to obtain the coating slurry;
(2) coating: coating the coating slurry on at least one surface of the substrate to obtain a first coated substrate;
(3) phase transformation: subjecting the first coated substrate to the phase transformation to obtain a second coated substrate;
(4) drying: rinsing and drying the second coated substrate obtained in the step (3) to obtain a composite separator; and
(5) UV crosslinking: irradiating the composite separator under UV light to initiate a crosslinking reaction to obtain a UV-crosslinked composite separator.

11. A preparation method of the coated separator according to any one of claims 7 to 9, comprising the following steps:
(1) preparation of the coating slurry: adding 0.001 wt% to 5.0 wt% of the photoinitiator, 50 wt% to 95 wt% of a highly heat-resistant material, and 0 wt% to 5 wt% of other additives to the solvent, and thoroughly stirring a resulting mixture to obtain the coating slurry;
(2) soaking: soaking the substrate in the coating slurry to obtain a first soaked substrate;
(3) phase transformation: subjecting the first soaked substrate to the phase transformation to obtain a second soaked substrate;
(4) drying: rinsing and drying the second soaked substrate obtained in the step (3) to obtain a composite separator; and
(4) UV crosslinking: irradiating the composite separator under UV light to initiate a crosslinking reaction to obtain a UV-crosslinked composite separator.

12. A preparation method of the coated separator according to any one of claims 7 to 9, comprising the following steps:
(1) preparation of the coating slurry: adding 0.001 wt% to 5.0 wt% of the photoinitiator, 50 wt% to 95 wt% of a highly heat-resistant material, and 0 wt% to 5 wt% of other additives to the solvent, and thoroughly stirring a resulting mixture to obtain the coating slurry;
(2) coating: coating the coating slurry on at least one surface of the substrate to obtain a coated substrate; or soaking: soaking the substrate in the coating slurry to obtain a soaked substrate;
(3) drying: drying the coated substrate or the soaked substrate obtained in the step (2) to obtain a composite separator; and
(4) UV crosslinking: irradiating the composite separator under UV light to initiate a crosslinking reaction to obtain a UV-crosslinked composite separator.

13. The preparation method of the coated separator according to any one of claims 9 to 12, wherein the UV light has a wavelength of 210 nm to 420 nm and an intensity of 50 mj/cm² or more, and the UV crosslinking is conducted for 0.001 s to 10 s.
